## Europäisches Patentamt

## European Patent Office

## Office européen des brevets

(11) Publication number: **0 069 714**
**B1**

(12) **EUROPEAN PATENT SPECIFICATION**

(45) Date of publication of patent specification: **14.01.87**

(21) Application number: **82830201.8**

(22) Date of filing: **07.07.82**

(51) Int. Cl.⁴: **B 62 D 47/02, B 60 K 17/14, B 64 F 1/31**

(54) **Bus for airport use.**

(30) Priority: **08.07.81 IT 4885881**

(43) Date of publication of application: **12.01.83 Bulletin 83/02**

(45) Publication of the grant of the patent: **14.01.87 Bulletin 87/03**

(84) Designated Contracting States: **AT BE CH DE FR GB LI NL SE**

(56) References cited:
**DE-A-2 611 993**
**DE-C- 908 703**
**FR-A-2 392 866**
**US-A-3 344 879**
**US-A-3 554 320**

**REVUE AUTOMOBILE, vol. 70, no. 24, june 1977, "L'autobus futur; vu par Heuliez"**

(73) Proprietor: **Marchionni, Mauro**
**Via Vigorelli, 19**
**I-00144 Roma (IT)**

(72) Inventor: **Marchionni, Mauro**
**Via Vigorelli, 19**
**I-00144 Roma (IT)**

(74) Representative: **de Simone, Domenico et al Ing. Barzanò & Zanardo Roma S.p.A. Via Piemonte 26**
**I-00187 Roma (IT)**

## Description

This invention concerns a bus for airport use of new conception for operation head on and perpendicular to aircraft.

A careful study of the movements in the airport areas leads to the conclusion that all engines for assistance to aircrafts can operate only situating their own axis in a perpendicular way to the axis of the aircraft. The only engine that is not able to operate in such a way is the bus for transporting passengers.

Since the years '60, it has been tried to solve this problem by means of suitable engines. The first application was at Washington-Dulles airport, where for the first time mobil-lounges, built by Plane-Mate and projected by Saarinnen (Finland), were used. The novelty of the present invention, therefore, does not consist in having invented a vehicle for the transport of passengers being able to operate in a way perpendicular to the aircraft, but in the one of having built a bus the cost thereof being at least 5 to 6 times inferior and having the same capacity as the mobil-lounges.

DE—A—2 611 993 does not start from the same principles, nor does it get to the same results of the present invention. Actually, the main purpose of DE—A—2 611 993 is the one of realizing an urban bus with a low floor, and not an airport bus with a longitudinal passengers flow, and this is shown by the fact that DE—A—2 611 993 does not provide a different concept of the engine, but a complicated engine transmission being more suitable for city distances, instead of the simple hydraulic transmission, suitable for short airport distances.

Furthermore, the system disclosed in DE—A—2 611 993 can not be applied to airport buses with longitudinal passengers' flow, because the transmission axis becomes an obstacle to such flow, which however if the main feature of the present invention.

The aim set forth is reached, according to the present invention, by means of a bus provided with a preferably thermic engine, on the roof, with hydraulic or electric transmission to the drive wheels, to create a completely free interior space to allow the passenger flow along the longitudinal axis of the bus. The claimed bus has the feature of having four steerable wheels, with independent suspension at vertical viscous elastic elements, the fix and the mobile part consisting in rotoidal couplings of the piston-cylinder kind, and with driving wheels, each being already provided with a reductor and hydraulic motors, suitable for being connected, in series or in parallel, according to the needs, to eliminate the bridge, differential and transmission organs. Therefore, the framework has a different project and provides the doors at the two ends of the bus.

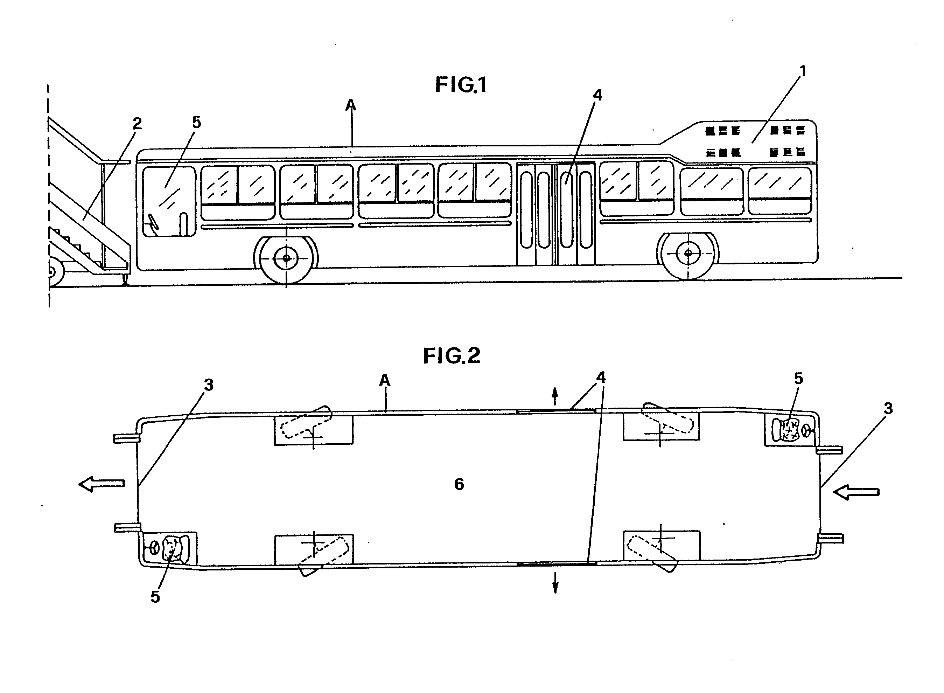

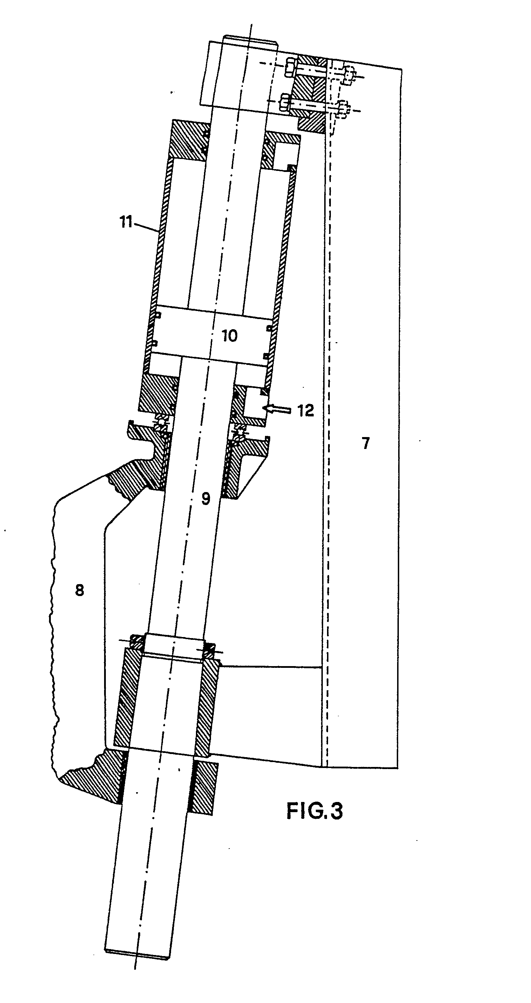

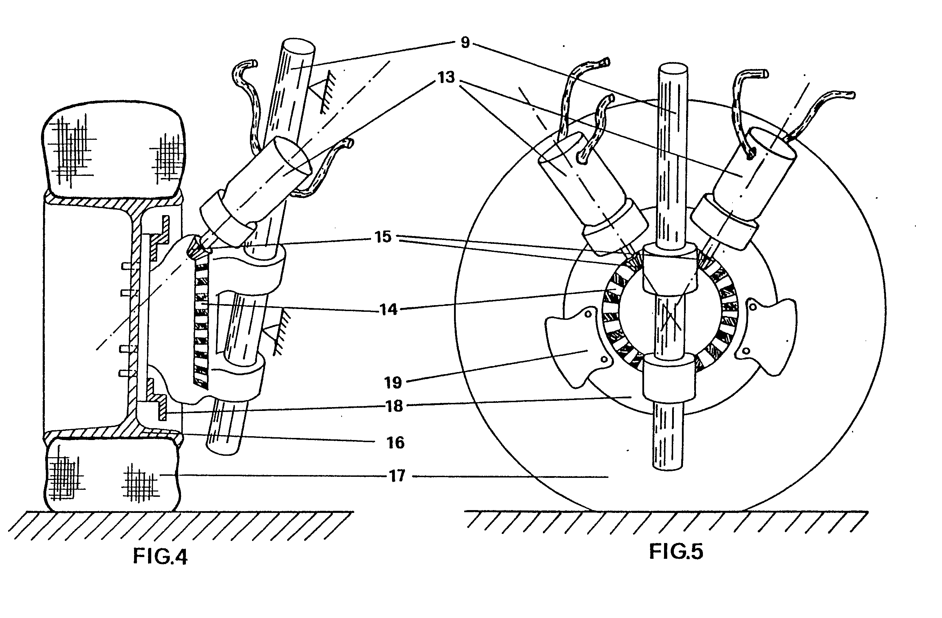

A preferred embodiment of the invention is shown in the attached drawings in figures 1, 2, 3, 4 and 5.

Figure 1 shows a side view of the bus.

Figure 2 shows a schematized horizontal section.

Figure 3 shows a cross-section of the device to vary the height off the ground, when the bus is in the lowest possible position.

Figures 4 and 5 show, respectively, front and side axonometric views of the hydraulic motors installed on each drive wheel.

The drawings show in detail thermal engine 1 installed on the roof of the bus A, preferably at one end, so as to minimize bulk and leave interior space 6 completely free for the passengers to enter and exit via the longitudinal doors 3, toward the automatic loading ramp 2 or the side emergency doors 4, with small driving cabins 5 at each end, to allow approach to and departure from the aircraft and the terminal with no need to perform dangerous maneuvers in reverse.

The support box for steerable wheel 8 is attached to the framework 7 of the bus A via refaced and chrome-plated bar 9 for sliding and rotating said box, while said bar is joined to the pad with sealing gaskets 10, mobile inside contrast cylinder 11 and connected to a pneumatic generator in parallel with the pressurized oil line 12, to serve dual purposes as the elastic element for boxes 8 and the hydraulic cylinder to vary height from the ground, kept very low to facilitate passenger movement on and off the bus but raised during transit to go up hills and go over uneven terrain.

In the case of hydraulic transmission, the installation of at least two motors 13 for each drive wheel, with rim 16, tube 17, disk brake 18 and clamp brake 14, moved by pinions 15, connected to the shafts of said motors 13, to allow normal transit of the loaded vehicle at standard speeds, using said motors 13 in parallel, as well as fast speeds with the vehicle empty for transfer between airports and from the manufacturer to the airport, and vice versa, using said motors 13 in series.

## Claims

1. A bus (A), in particular for airport use, with a very low and uniform floor so as to facilitate the getting up and off for passengers and with the engine situated on the roof, preferably at one end, so as to reduce the bulk and leave the inner space at complete disposition for the passengers, characterized in that doors (3) are placed at both ends of the vehicle so as to allow the passengers' flow along the longitudinal axis of the bus, and in that a small driving cabin (5) is provided at each end for allowing the approach to and departure from the aircraft and terminal, with no need to perform dangerous maneuvers in reverse.

2. A bus for airport use as claimed in claim 1, wherein four steerable wheels are used, with independent suspensions and with hydraulically or electrically motorized drive wheels to eliminate the bridge, differential and transmission organs.

3. A bus for airport use as claimed in the preceding claims, wherein the support box for steerable wheel (8) is attached to the framework (7)

of the bus (A) via refaced and chrome-plated bar (9) for sliding and rotating said box, while said bar is joined to the pad with sealing gaskets (10), mobile inside contrast cylinder (11) and connected to a generator in parallel with the pressurized oil line (12), to serve dual purposes as the elastic element for boxes (8) and the hydraulic cylinder to vary height from the ground, kept very low to facilitate passenger movement on and off the bus raised during transit to go up hills and go over uneven terrain.

4. A bus for airport use as claimed in the preceding claims, wherein at least two motors (13) are installed for each drive wheel, with rim (16), tube (17), disk brake (18) and clamp brake (19), connected to the refaced bar (9) via drive crown (14), moved by pinions (15), connected to the shafts of said motors (13), to allow normal transit of the loaded vehicle at standard airport speeds, using said motors (13) in parallel, as well as fast speeds with the vehicle empty for transfer between airports and from the manufacturer to the airport, and vice versa, using said motors (13) in series.

## Patentansprüche

1. Ein Bus, anwendbar insbesondere im Flughafen, mit einem sehr niedrigen und gleichfoermigen Boden zur Erleichterung des Ein- und Aussteigens der Fahrgaeste und mit einem vorzueglich auf einem Busdachende angeordneten Motor, um somit den Raumbedarf zu verringern und den Innenraum zur vollen Verfuegung der Fahrgaeste freizulassen, dadurch gekennzeichnet, dass die Tueren (3) an den beiden Busenden angeordnet sind, um den Durchgang der Fahrgaeste entlang der Bus-Laengsachse zu erlauben und dass eine kleine Fahrer-Kabine an beiden Busenden angeordnet ist, um die An- und Abfahrt vom Flugzeug und dem Flughafen-Terminal zu gestatten, und um gefaehrliche Wende-Manoever zu vermeiden.

2. Ein Flughafen-Bus nach Anspruch 1, in dem vier lenkbare Raeder angewandt werden, mit unabhaengigen Aufhaengungen und mit hydraulisch oder elektrisch angetriebenen Treibraedern, um die Bruecken-, Differential- und Getriebe-Glieder zu vermeiden.

3. Ein Flughafen-Bus nach den vorhergehenden Anspruechen, bei dem der Lagerkasten fuer die lenkbaren Raeder (8) an den Busrahmen (7) mittels eines geschliffenen und verchromten Stabes gleit- und drehbar befestigt ist, wobei der genannte Stab mit einer Daempfer-Buchse mit Dichtungen (10) verbunden ist, welche innerhalb eines Kontrast-Zylinders (11) beweglich sind und mit einem pneumatischen Druckerzeuger in Parallelschaltung zur Oeldruckleitung (12) verbunden ist, mit der doppelten Aufgabe, als ein elastisches Glied fuer Kasten (8) und als hydraulischer Zylinder fuer die Aenderung der Hoehe vom Boden zu dienen, die niedrig gehalten wird, um die Ein- und Aussteigebewegungen der Fahrgaeste zu erleichten und wird vergroessert zum Durchfahren unebenen und geweilten Boeden.

4. Ein Flughafen-Bus nach den vorhergehenden Anspruechen, bei dem mindestens zwei Motoren (13) fuer jedes Treibradangeordnet sind, welches eine Radfelge (16), einen Radreifen (17), eine Scheibenbremse (18) und eine Backenbremse (19) aufweist und mit dem geschliffenen Stab (9) durch einen Treibzankranz (14) verbunden ist, der mittels eines an eine Welle des Motors (13) befestigten Antriebritzels (15) getrieben wird, um den gewoehnlichen Flughafenverkehr des belasteten Wagens mit der genormten Geschwindigkeit bei parallel geschalteten Motoren, so wie auch mit einer hoehren Fahrgeschwindigkeit des leeren Wagens bei reihengeschalteten Motoren zwischen den Flughafen und vom Hersteller zum Flughafen und umgekehrt zu gestatten.

## Revendications

1. Un autobus (A), particulièrement pour aéroports, avec un plancher très bas er uniforme pour faciliter la montée la descente des passagers et avec le moteur situé sur le toit, préférablement à un bout, de façon à réduire l'encombrement et laisser l'espace intérieur à l'entière disposition des passagers, charactérisé en ce que les portes (3) sont placées aux deux bouts du véhicule de façon à permettre le flux des passagers le long de l'axe longitudinale de l'autobus, et en ce qu'une petite cabine du conducteur (5) est prévue à chaque bout, pour permettre l'approche à et le départ de l'avion et le terminal, sans besoin des demi-tours dangereuses.

2. Un autobus pour aéroports selon la revendication 1, dans lequel quatre roues sont prévues, avec suspensions indépendantes et avec roues motrices, hydrauliquement ou électriquement motorisées, de façon à éliminer les organs de pont, différentiel et transmission.

3. Un autobus pour aéroports selon les revendications précédentes, dans lequel le boîtier-support pour les roues directrices (8) est fixé au chassis (7) de l'autobus (A) au moyen d'une barre rectifiée et chromée (9) pour coulisser et tourner ladite barre, qui est unie à un palier à glissement avec des joints d'étanchéité (10), qui sont mobiles dans un cylindre de coulissement (11) et joints à un générateur pneumatique en parallèle avec le conduit de huil pressurisé (12) pour remplir la double fonction comme élément élastique pour boîtiers (8) et comme cylindre hydraulique pour changer l'hauteur du plancher, maintenue très basse pour faciliter les mouvements de montée et de descente des passagers, quand l'autobus doit transiter sur des cassis ou sur un terrain accidenté.

4. Un autobus pour aéroports selon les revendications précédentes, dans lequel au moins deux moteurs (13) sont montés pour chaque roue motrice, ayant le bandage (16), l'envéloppe (17), le frein à disque (18) et le frein à patins (19) et joints à la barre rectifiée au moyen d'une couronne motrice (14) actionnée par des pignons (15) joints aux arbres desdits moteurs (13) pour permettre le passage ordinaire du véhicule chargé à la vitesse normale de l'aéroport avec lesdits moteurs (13) réunis en parallèle, ainsi que à la vitesse élévée du véhicule vide pour le transfer entre les aéroports et entre le fabricateur et l'aéroport, et vice-versa, avec lesdits moteurs (13) réunis en série.

FIG.1

FIG.2

0 069 714

**FIG.3**

9

13

15

14

19

18

16

17

**FIG.4**

**FIG.5**

0 069 714

3